# EUROPEAN PATENT SPECIFICATION

(11) **EP 3 888 455 B1**
(45) Date of publication and mention of the grant of the patent: **03.05.2023**
(21) Application number: 21165901.6
(22) Date of filing: 30.03.2021
(51) Int. Cl.: A01K 7/00, A01K 5/01, A45F 3/16, B65F 1/00, A45F 3/18, B65D 25/04, B65D 33/00, B65D 43/16, B65D 47/08, B65D 83/08, B65D 85/672

(54) **PORTABLE PET CUP**
TRAGBARER BECHER FÜR HAUSTIER
TASSE PORTATIVE POUR ANIMAL DOMESTIQUE

(30) Priority: 30.03.2020 CN 202020434378 U
(43) Date of publication of application: 06.10.2021
(73) Proprietor: Guangzhou PawGether Pet Product Technology Co., Ltd., Guangzhou City, Guangdong Province 510000 (CN)
(72) Inventor: YU, Youkai, Guangzhou City, Guangdong Province 510000 (CN); YU, Peizhen, Guangzhou City, Guangdong Province 510000 (CN)
(74) Representative: Grünecker Patent- und Rechtsanwälte PartG mbB

(56) References cited:
- WO-A1-2013/134896
- CN-U- 209 473 305
- KR-A- 20150 136 038
- US-A1- 2014 360 434
- US-A1- 2014 360 908
- US-A1- 2017 258 041

## Description

### TECHNICAL FIELD

The present application relates to the technical field of pet appliances in particular, a portable cup.

### BACKGROUND

With the gradual improvement of people's quality of life, keeping pets has become an indispensable part of many people's lives. When people take pets out, they need to bring water and food with them. A common kettle can only hold drinking water, which can only solve the water drinking problem of pets. However, extra utensils need to be prepared to hold food, leading to the increase of the travel burden. Moreover, excretion requirements of pets may also need to be satisfied during travel and pets' excrement needs to be treated in time so that public environmental hygiene is maintained. The pet portable cup in the related art has a single function so that people often need to carry a variety of tools when they go out with pets, which is very inconvenient. Therefore, how to improve the existing portable cup to overcome the preceding problem is an urgent problem to be solved by those skilled in the art. Further relevant technologies are also known from US20140360434A1, which relates to a portable animal watering, feeding, and waste bag storing apparatus.

### SUMMARY

The purpose of the present application is to provide a portable cup with multiple storage cavities inside so that a user may carry water, food, and a toilet bag for processing pet excrement at the same time and the travel burden may be reduced.

To achieve this purpose, the present application adopts solutions described below.

The invention is set out in the appended set of claims.

Provided is a portable cup configured to hold pet supplies, including a cup body and end covers One end of two ends of the cup body along a height direction of the cup body is provided with at least one cavity, another end of the two ends of the cup body along the height direction of the cup body is provided with at least two cavities, and each cavity is configured to accommodate the pet supplies, wherein the pet supplies comprise water, food, and a toilet bag for processing pet excrement.

The end covers are connected to the two ends of the cup body along the height direction of the cup body, respectively, and each of the end covers is capable of opening or closing a cavity at a respective one end of the two ends of the cup body along the height direction of the cup body.

Optionally, each of the end covers includes a cover body, an access port, and a cover plate.

The cover body is connected to the respective one end of the two ends of the cup body along the height direction of the cup body.

The access port is disposed on the cover body and corresponds to the respective cavity.

The cover plate is movably connected to the cover body, and the cover plate is capable of opening or closing the respective access port.

Optionally, an opening of the each cavity is connected to a respective one of the end covers and the each of the end covers includes a cover body.

The cover body is detachably connected to an end portion at the opening of the respective cavity on the cup body.

Optionally, a sealing member is provided between each of the end covers and the cup body.

Optionally, the portable cup further includes an additional cavity assembly, the additional cavity assembly is detachably connected to the cup body or a respective one of the end covers, and an additional cavity is formed between the additional cavity assembly and the cup body or between the additional cavity assembly and the respective one of the end covers.

Optionally, the additional cavity assembly includes a cover. The cover is detachably connected to an end portion of the cup body or the respective one of the end covers at the end portion of the cup body, and the additional cavity is formed between the cover and an end cover at a lower end of the cup body; or the additional cavity assembly further includes a cover cup, the cover cup is connected to an end portion of the cover, and the additional cavity is formed between the cover and the cover cup.

Optionally, cavities of the at least one cavity and the at least two cavities include a first storage cavity, and the first storage cavity is disposed at an upper end of the cup body and is configured to hold water.

According to the invention, cavities of the at least one cavity and the at least two cavities include a second storage cavity for holding a roll bag, the second storage cavity is disposed at the lower end of the cup body, a central shaft is provided in the second storage cavity, and the roll bag is sleeved outside the central shaft.

Optionally, a side surface of the cup body corresponding to the second storage cavity is provided with an extraction port, such that the roll bag is extracted from the extraction port. Optionally, the cavities of the at least one cavity and the at least two cavities include a third storage cavity for holding food or other pet supplies, and the third storage cavity and the second storage cavity are disposed side by side at the lower end of the cup body.

The present application has the beneficial effects described below.

The present application provides a portable cup. The portable cup is configured to hold pet supplies. The portable cup includes a cup body and end covers. One end of two ends of the cup body along a height direction of the cup body is provided with at least one cavity, the other end of the two ends of the cup body along the height direction of the cup body is provided with at least two cavities, and each cavity is configured to accommodate the pet supplies. The end covers are connected to the two ends of the cup body along the height direction of the cup body, respectively, and each of the end covers can open or close a cavity at a respective one end of the two ends of the cup body along the height direction of the cup body. Since each of the two ends of the cup body is provided with an opening, compared with the existing portable cup in which a water opening and a food opening are disposed at the same end, the opening of a single cavity is increased for easy access to the pet supplies when the size of the portable cup and the number of cavities are unchanged. Moreover, the portable cup is provided with at least three cavities so that it can be ensured that a user may carry water, food, and a toilet bag for processing pet excrement at the same time and the needs of traveling with pets can be satisfied. According to actual needs, other supplies may also be placed in the portable cup so that the number of carried tools during travel and the travel burden can be reduced.

### BRIEF DESCRIPTION OF DRAWINGS

FIG 1 is a structure view of a portable cup according to an embodiment of the present application;
FIG 2 is a sectional view taken along the A-A direction of FIG 1;
FIG 3 is a structure view of the portable cup when an upper end cover is opened according to embodiment one of the present application;
FIG 4 is a structure view of the portable cup from another perspective according to embodiment one of the present application;
FIG 5 is a structure view of the portable cup when a lower end cover is opened according to embodiment one of the present application;
FIG 6 is a structure view of the portable cup when the lower end cover is removed according to embodiment one of the present application;
FIG 7 is a structure view of a door cover according to embodiment one of the present application;
FIG 8 is a structure view of the portable cup when the door cover is removed according to embodiment one of the present application;
FIG 9 is a structure view of a portable cup according to embodiment two of the present application; and
FIG 10 is an exploded view of the portable cup according to embodiment two of the present application.

### Reference list

- 1: cup body
- 2: end cover
- 3: cavity
- 4: partitioning assembly
- 5: sealing member
- 6: additional cavity assembly
- 21: cover body
- 22: access port
- 23: cover plate
- 24: water outlet pipe
- 31: second storage cavity
- 32: first storage cavity
- 33: third storage cavity
- 41: partitioning layer
- 42: partitioning piece
- 61: additional cavity
- 62: cover
- 311: central shaft
- 312: extraction port
- 313: door cover

### DETAILED DESCRIPTION

To better illustrate the solved technical problem, the adopted solution, and the achieved technical effects of the present application, the solution of the present application is further described in conjunction with drawings and embodiments.

In the description of embodiments of the present application, unless otherwise expressly specified and limited, the term "connected to each other", "connected", or "fixed" is to be construed in a broad sense, for example, as fixedly connected, detachably connected, or integrated; mechanically connected or electrically connected; directly connected to each other or indirectly connected to each other via an intermediary; or internally connected or interaction between two components. For those of ordinary skill in the art, specific meanings of the above terms in the present application can be understood according to specific conditions.

In the present application, unless otherwise expressly specified and limited, when a first feature is described as "on" or "below" a second feature, the first feature and the second feature may be in direct contact or be in contact via another feature between the two features instead of being in direct contact. Moreover, when the first feature is described as "on", "above" or "over" the second feature, the first feature is right on or obliquely on the second feature, or the first feature is simply at a higher level than the second feature. When the first feature is described as "under", "below" or "underneath" the second feature, the first feature is right under or obliquely under the second feature, or the first feature is simply at a lower level than the second feature.

In the description of this embodiment, the orientations or position relations indicated by terms such as "above", "below", "right" and the like are based on orientations or position relations shown in the drawings. These orientations or position relations are intended only to facilitate description and simplify operations and not to indicate or imply that a device or element referred to must have such specific orientations or must be configured or operated in such specific orientations. Thus, these orientations or position relations are not to be construed as limiting the present application. In addition, the terms "first" and "second" are used only to distinguish between descriptions and have no special meaning.

### Embodiment one

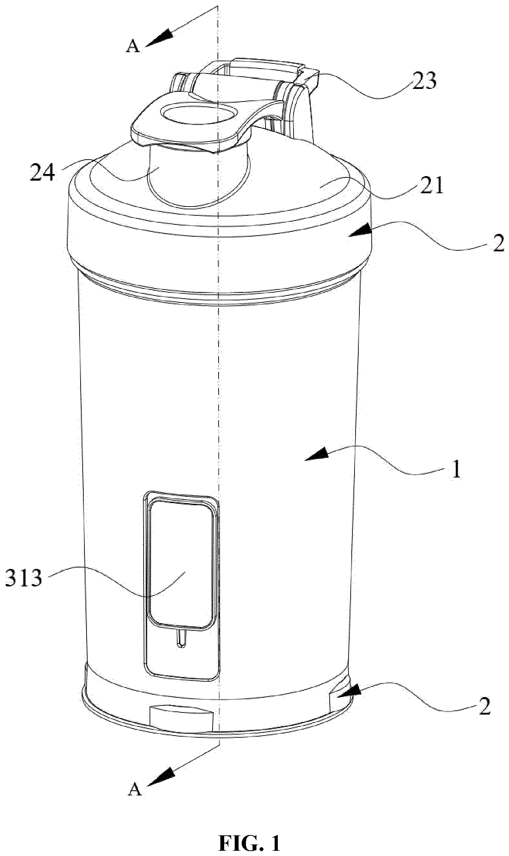

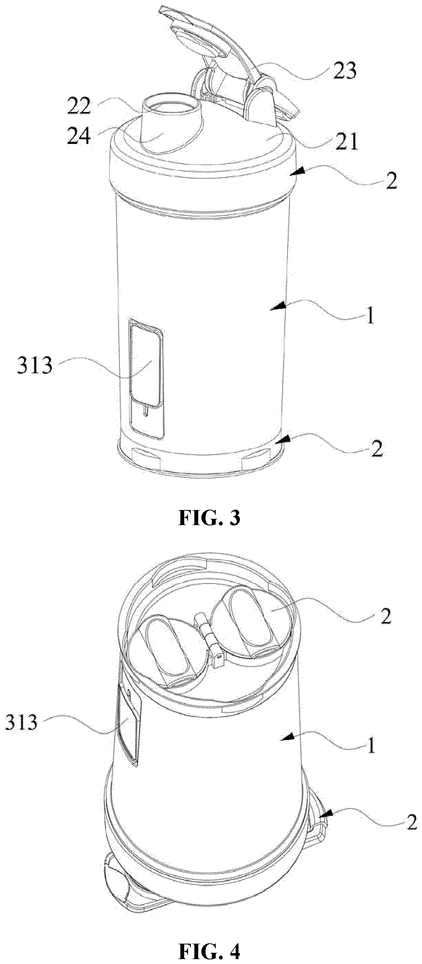

Embodiments of the present application provide a portable cup configured to hold pet supplies. As shown in FIGS. 1 to 10, the portable cup includes a cup body 1 and end covers 2. End covers 2 are connected to ports of the cup body 1 respectively, and the end covers 2 can open or close the respective ports of the cup body 1 so that the placement of the pet supplies can be achieved. The pet portable cup in the related art is often provided with only cavities capable of holding water and food to satisfy the drinking and feeding needs of pets. However, the cavities for holding water and food are usually disposed at one end of the cup body 1. Corresponding cavities are opened to achieve access to water and food. This arrangement makes the opening of each cavity relatively small, which is inconvenient for access to food.

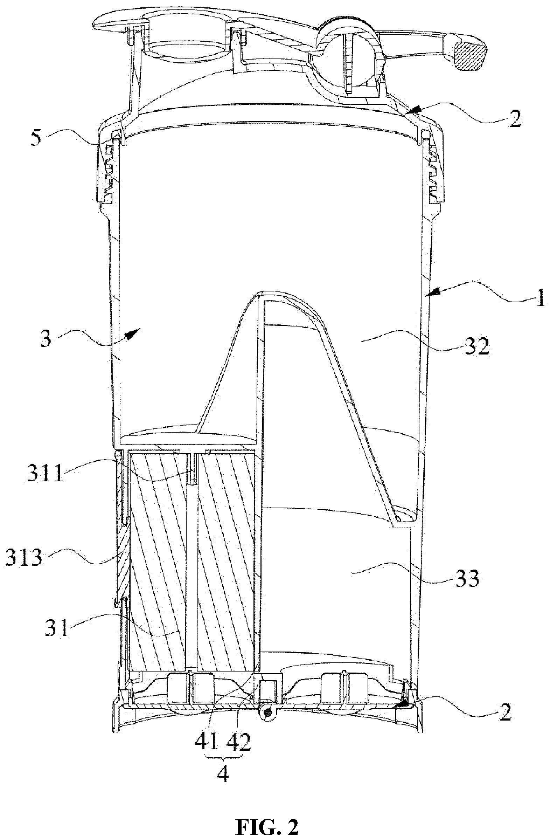

To solve the preceding problem, as shown in FIGS. 2 to 5, in this embodiment, one end of two ends of the cup body 1 of the portable cup along a height direction of the cup body 1 is provided with at least one cavity 3, another end of the two ends of the cup body 1 along the height direction of the cup body 1 is provided with at least two cavities 3, each cavity 3 is configured to accommodate the pet supplies, each of the two ends of the cup body 1 along the height direction of the cup body 1 is connected to a respective end cover 2 corresponding to a respective cavity 3. Each end cover 2 can open or close the cavity 3 at a respective one of the two ends. Since each of the two ends of the cup body 1 is provided with an opening, compared with the existing portable cup in which a water opening and a food opening are disposed at the same end, the opening of a single cavity 3 is increased for easy access to the pet supplies when the size of the cup body 1 and the number of cavities 3 are unchanged. Moreover, when a user travels with pets, only a single cavity 3 is often unable to satisfy the actual needs of the user. The portable cup provided in this embodiment is provided with at least three cavities 3 so that it can be ensured that the user may carry water, food, and a toilet bag for processing pet excrement at the same time and the needs of traveling with pets can be satisfied. According to actual needs, other supplies may also be placed in the portable cup so that the number of carried tools during travel and the travel burden can be reduced.

In an embodiment, as shown in FIG 2, the two ends of the cup body 1 along the height direction of the cup body 1 are provided with three cavities 3 so that each of the needs of carrying water, food, and a toilet bag for processing pet excrement is satisfied through a respective one of the three cavities 3. One end of the two ends of the cup body 1 along the height direction of the cup body 1 is provided with one cavity 3, the other end of the two ends of the cup body 1 along the height direction of the cup body 1 is provided with two cavities 3, and corresponding end covers 2 are opened or closed so that access to the pet supplies can be achieved. In this embodiment, the cavities 3 include a first storage cavity 32, a second storage cavity 31, and a third storage cavity 33. The first storage cavity 32 is disposed at an upper end of the cup body 1, and the second storage cavity 31 and the third storage cavity 33 are disposed at a lower end of the cup body 1, so that the center of gravity of the portable cup can be lowered and the stability of the placement of the portable cup can be improved. The number of cavities 3 and the distribution position of each cavity 3 may be adjusted according to actual needs, and the type of the pet supply placed in each cavity 3 may also be adjusted according to the needs of a user, which should not be construed as a limitation to the present application.

In actual use, an opening of each cavity 3 may be provided with an end cover 2, and a user may open the end cover 2 disposed on the corresponding cavity 3 so that access to the pet supplies can be achieved. In an embodiment, each end cover 2 includes a cover body 21, and the cover body 21 is detachably connected to an end portion at an opening of the corresponding cavity 3 on the cup body 1; that is, the cover body 21 may be connected to an opening of the corresponding cavity 3 through a screw or a buckle, and when in use, the cover body 21 can be directly opened so that the cavity 3 is opened, and thus the structure is simple and it is convenient.

Moreover, in a situation where the sealing requirement is high, the connection between the end cover 2 and the cup body 1 may also be achieved by improving the structure of the end cover 2. In an embodiment, each end cover 2 includes a cover body 21, access ports 22, and a cover plate 23. The cover body 21 is connected to a respective one of two ends of the cup body 1 along a height direction of the cup body 1. The cover body 21 is provided with an access port 22 corresponding to the respective cavity 3. The cover plate 23 is movably connected to the cover body 21, and the cover plate 23 can open or close the respective access port 22. The pet supplies can be put in or taken out from the access ports 22, and the storage of the pet supplies is ensured by opening or closing the cover plate 23. Optionally, the cover body 21 may be buckled to the port of the cup body 1 through a buckle or may be detachably connected to the port of the cup body 1 through a screw or the like. When it is inconvenient to use the access port 22, the cover body 21 may also be directly opened so that access to the pet supplies can be achieved. Moreover, the cover plate 23 may be flip-fitted to the respective access port 22 and may also be detachably connected to the respective access port 22 through a screw or the like. In this embodiment, the cover body 21 is detachably connected to the port of the cup body 1 through a screw, and the cover plate 23 is flip-fitted to the respective access port 22. This matching relationship and structure is simpler and interference between components does not exist. A user can flip and open the cover plate 23 with one hand so that the pet supplies can be poured out, which is more convenient and labor-saving. Moreover, the cover body 21 is threadedly connected to the cup body 1 so that a structure with a better sealing performance can be ensured, the situation where buckling is not tight can be avoided, and better practicability can be ensured.

The shape of the cover body 21 may also be selected according to the actual situation. For example, the cover body 21 connected to the upper end of the cup body 1 may be a circular arc transition structure with a high center and a low edge, or the cover body 21 is provided with a handle so that it is convenient to carry the cover body 21, which facilitates taking and carrying of the portable cup. An edge of the cover body 21 connected to the lower end of the cup body 1 is provided with a support portion, and the cover plate 23 does not protrude from the support portion along the height direction of the cup body 1 so that it can be ensured that the portable cup can stand stably in any plane and it is more convenient to place the portable cup. The form of the support portion may be a circular ring with a horizontal bottom surface so that the support portion has a simple structure and high stability. Therefore, the shape and structure of each end cover 2 and the connection manner between each end cover 2 and the cup body 1 can meet actual use requirements, and the specific form is not limited herein.

When the cover bodies 21 are set to be different shapes, to prevent the cover body 21 from being buckled on the cup body 1, a partial gap exists between the cavities 3 and the respective cover body 21 along a height direction of the cup body 1. As a result, the interconnection between the cavities 3 disposed at the same end affects the independent storage of the built-in pet supplies. To solve this problem, the portable cup provided in this embodiment includes a partitioning assembly 4. As shown in FIG 2, at least one end of the cup body 1 along the height direction of the cup body 1 is provided with at least two cavities 3, a partitioning layer 41 is provided between two cavities 3 at the same end, the edge of the cover body 21 corresponding to the portioning layer 41 is provided with a partitioning piece 42, and the partitioning piece 42 may be connected to the partitioning layer 41 when the cover body 21 is closed on the cup body 1 so that the independent storage of the pet supplies in each cavity 3 can be ensured. The connection manner between the partitioning layer 41 and the partitioning piece 42 may be set as follows: the partitioning piece 42 is fitted with and snapped into the partitioning layer 41, that is, the partitioning piece 42 can seamlessly abut against an edge of the partitioning layer 41 so that when the end cover 2 is closed on the cup body 1, multiple independent cavities 3 can be formed.

To further ensure the sealing of the pet supplies inside each cavity 3, a sealing member 5 is provided between the cover body 21 and the cup body 1. That is, a bottom surface of the cover body 21 is provided with a sealing groove with a downward opening, and a sealing ring for sealing is disposed in the sealing groove. When the end cover 2 is connected to the cup body 1, an opening at the top of the cup body 1 is snapped into the sealing groove of the cover body 21, and the cup body 1 and the end cover 2 are sealed by the sealing member 5 so that the water stored in the portable cup can be prevented from overflowing, the food stored in the portable cup can be prevented from being damped and deteriorating, and thus the safety of the built-in pet supplies can be improved.

In this embodiment, to facilitate a user to carry water, food, and a toilet bag for processing pet excrement at the same time, as shown in FIGS. 1 to 3, the first storage cavity 32 is disposed at the upper end of the cup body 1 and is configured to hold water. Although the sealing member 5 is provided between the cover body 21 and the cup body 1, it is inevitable that the cover plate 23 is not completely connected to the access port 22 due to mistakes. To prevent water from leaking out of the portable cup, water may be stored in the first storage cavity 32 at the upper end of the cup body 1 so that the safety of the portable cup can be ensured.

In an embodiment, a water outlet pipe 24 is provided on the end cover 2 corresponding to the first storage cavity 32 to facilitate water outlet. The water outlet pipe 24 is in communication with the first storage cavity 32. The top of the water outlet pipe 24 is the access port 22. After the access port 22 is opened through the cover plate 23, water can be poured out along the water outlet pipe 24, that is, the water outlet pipe 24 is provided to achieve drainage, and splashing when the water pours can be avoided.

Further, as shown in FIG 2 and FIGS. 4 to 6, the second storage cavity 31 is disposed at the lower end of the cup body 1 and is configured to hold a roll bag. The roll bag refers to a cylindrical winding-type extraction bag, which may be a plastic film bag, a paper bag, or other material bags. In an embodiment, the roll bag is set to be a roll film bag. At present, there are many point-breaking roll film bags on the market so that it is more convenient to achieve the replacement of the roll bag. After being torn off, the roll bag may serve as the toilet bag for processing pet excrement. The second storage cavity 31 is provided with a central shaft 311. Roll bags may be sleeved on an outer side of the central shaft 311. A side surface of the cup body 1 corresponding to the second storage cavity 31 is provided with an extraction port 312, and part of the roll bags may be extracted from the extraction port 312 for use. Therefore, a user can take out a roll bag from the portable cup at any time to process pet excrement so that the sanitation of the public environment can be ensured. In an embodiment, the second storage cavity 31 is set to be a cylindrical shape and abuts against to a side wall of the cup body 1. The built-in volume and shape of the second storage cavity 31 are fitted with the shape and size of the existing roll bag so that it can be ensured that the roll bag can be easily placed in the second storage cavity 31. The central shaft 311 can be fixedly disposed in the second storage cavity 31, which facilitates the sleeve connection of the roll bag; or the central shaft 311 may also be detachably disposed in the second storage cavity 31, and the specific form may be as follows: a shaft seat or shaft sleeve is disposed in the second storage cavity 31, and the central shaft 311 is set to be a hollow cylindrical shape. The central shaft 311 is sleeved outside the shaft seat or shaft sleeve so that the connection between the central shaft 311 and the second storage cavity 31 is achieved.

Further, the third storage cavity 33 and the second storage cavity 31 are disposed side by side at the lower end of the cup body 1, and the third storage cavity 33 is configured to hold food or other pet supplies. The volumes of the first storage cavity 32, the second storage cavity 31, and the third storage cavity 33 may be selected according to actual needs. In this embodiment, the third storage cavity 33 is set to be an arc-shaped structure recessed toward the middle and is connected to the second storage cavity 31 in a separated manner. The arc-shaped structure on the one hand prevents food from being stuck in the cavity 3, and on the other hand, increases the volume of the third storage cavity 33 to better satisfy the daily food requirements of pets. Moreover, the pet supplies stored in each cavity 3 may be independently selected according to the current use environment of a user. For example, when a bag for pet excrement needs to be discarded and there is no trash can in which excrement may be discarded, it is also feasible to place the toilet bag with excrement in a free cavity in the cup body 1 so that the embarrassing situation of carrying the excrement bag by hand can be avoided.

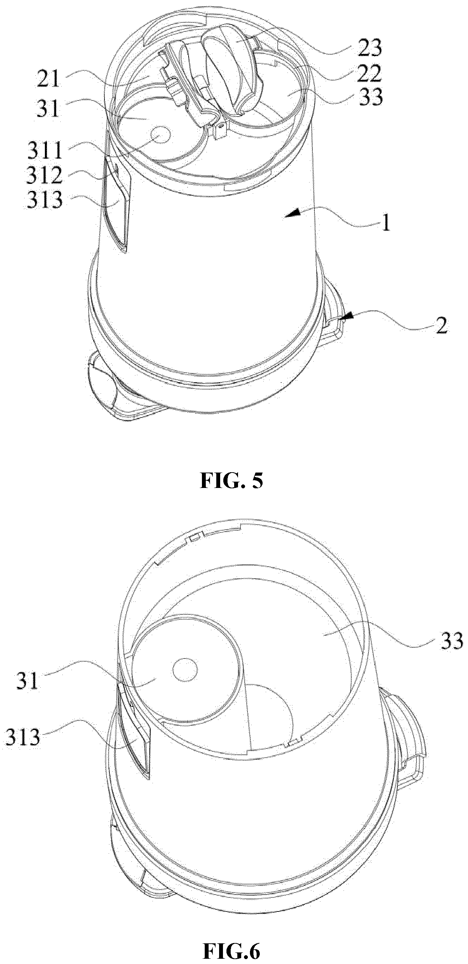

In this embodiment, as shown in FIG 5, to facilitate the storage of the roll bag in the second storage cavity 31, the cover body 21 in communication with the second storage cavity 31 is correspondingly provided with the access port 22, and the roll bag may be sleeved on the central shaft 311 from the access port 22. Since most of the existing pet toilet bags are set in the form of a degradable roll bag with a through hole through the center, the roll bag is directly sleeved on the central shaft 311 so that the replacement of the roll bag can be achieved, and the size of the access port 22 is enough for easily taking out or placing the roll bag. Moreover, the cover plate 23 provided on the cover body 21 can block the access port 22 so that the roll bag can be placed or taken out. When the roll bag runs out or needs to be replaced for other reasons, the cover plate 23 can be opened so that the roll bag can be placed or taken out from the access port 22 and the recycling of the portable cup can be achieved.

To achieve the extraction of the roll bag in the second storage cavity 31, a door cover 313 is movably connected on an outside of the cup body 1 to open or close the extraction port 312. When a user needs to extract the roll bag to process pet excrement, the roll bag can be extracted from the extraction port 312 by opening the door cover 313, and the door cover 313 can be closed when not in use so that the overall structure of the portable cup is more simple and reliable. Optionally, the door cover 313 may be rotatably fastened to the extraction port 312, slidably fastened to the extraction port 312, or detachably connected to the extraction port 312. In an embodiment, one side of the door cover 313 is flipped by a rotating shaft and fastened to a buckle on one side of the extraction port 312, a sliding connection between the door cover 313 and the extraction port 312 may also be achieved through a sliding groove and a sliding rail, and the door cover 313 may also be detachably buckled on the extraction port 312. The connection manner between the door cover 313 and the cup body 1 may be selected according to actual needs, that is, the connection manner only needs to satisfy the condition where the extraction port 312 can be opened or closed, and the specific connection manner is not specifically limited herein.

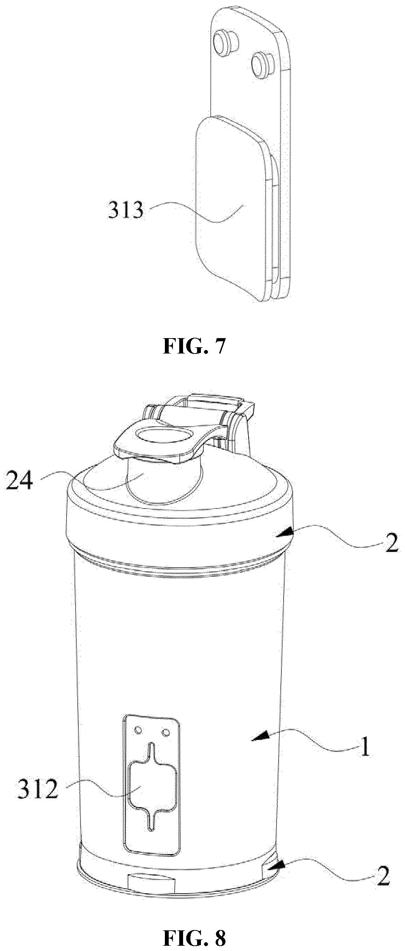

In this embodiment, as shown in FIGS. 7 to 8, the door cover 313 is made of a soft material, an inner side of the door cover 313 is provided with multiple protrusion portions, the extraction port 312 is provided with grooves corresponding to the protrusion portions, and each protrusion portion may be snapped into a respective groove. The multiple protrusion portions are provided to increase the tightness of the connection between the door cover 313 and the extraction port 312. In actual use, when a rotating connection or a sliding connection is adopted, the connection may become stagnant or loose due to too many times of use. Therefore, a soft material can prolong the service life. Moreover, one end of the door cover 313 may be provided with a connecting line through which the door cover 313 is connected to the cup body 1 so that the following case can be avoided: after being used and placed at will, the door cover 313 may be accidentally lost.

When the roll bag is extracted from the extraction port 312, the roll bag rotates along the central shaft 311 and is gradually extracted. To ensure that it is convenient for a user to extract the roll bag, one side wall of the extraction port 312 is provided with a cutting member, and the roll bag is set to a point-breaking type so that the cutting member may perform separation and individual roll bags may be obtained. In actual use, the user may only need to extract a section of roll bags at one time. However, it is often difficult to control the amount of extraction when the roll bags are directly extracted and separated by hand, and thus the long section of roll bags is often extracted at one time. Therefore, the cutting member is provided to control the number of roll bags obtained during one time of extraction so that the overall structure of the portable cup is simpler. Similar to the existing method for separating individual pieces of paper from a paper roll, the cutting member may separate individual roll bags.

### Embodiment two

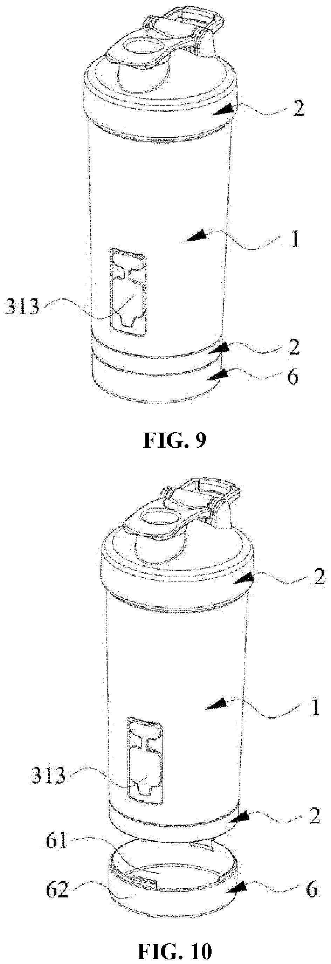

Embodiments of the present application provide a portable cup. The difference from embodiment one is that, as shown in FIGS. 9 to 10, the portable cup provided in this embodiment further includes an additional cavity assembly 6, the additional cavity assembly 6 is detachably connected to the cup body 1 or the end cover 2, and an additional cavity 61 is formed between the additional cavity assembly 6 and the cup body 1 or the end cover 2. The additional cavity assembly 6 may be hung on one side of the cup body 1 or detachably connected to one side of the cup body 1 or one side of the end cover 2 so that the additional cavity assembly 6 may be removed in time when there is no need to prepare too many utensils, which is convenient and labor-saving. Optionally, the additional cavity 61 may serve as a drinking bowl or a feeding bowl, that is, the additional cavity 61 may be detached at any time to facilitate feeding water or food to pets at any time. Moreover, the additional cavity 61 may store other items. For example, in the additional cavity 61, a tong for clamping pet excrement may be stored. In this manner, the functions of the portable cup can be further enriched to ensure the travel convenience of a user.

Considering the simplicity of the overall structure of the portable cup, the additional cavity assembly 6 is connected to the end cover 2 at the lower end of the cup body 1. In an embodiment, the additional cavity assembly 6 includes a cover 62, the cover 62 is detachably connected to an end portion of the cup body 1 or the end cover 2 at the end portion of the cup body 1, and the additional cavity 61 is formed between the cover 62 and the end cover 2 located at the lower end of the cup body 1. Moreover, to further expand the space of the portable cup, the additional cavity assembly 6 may further include a cover cup, the cover cup is connected to an end portion of the cover 62 so that the use space of the portable cup can be expanded. The set position and the set number of the additional cavity assembly 6 may be adjusted according to the actual situation.

The cover 62 and the cover cup may be connected to the outside of the end cover 2 at the lower end of the cup body 1 through a screw or may be connected to the end cover 2 through a buckle or the like. A user may choose whether to connect the additional cavity assembly 6 according to the current needs, which is more practical.

The above are merely preferred embodiments of the present application. Those of ordinary skill in the art will make modifications in the embodiments and application scope according to the concept of the present application. The content of this specification is not to be construed as limiting the present application.

## Claims

1. A portable cup, configured to hold pet supplies and comprising: a cup body (1), wherein one end of two ends of the cup body (1) along a height direction of the cup body (1) is provided with at least one cavity (3), another end of the two ends of the cup body (1) along the height direction of the cup body (1) is provided with at least two cavities (3), and each cavity (3) is configured to accommodate the pet supplies, wherein the pet supplies comprise water, food, and a toilet bag for processing pet excrement; and
end covers (2), wherein the end covers (2) are connected to the two ends of the cup body (1) along the height direction of the cup body (1), respectively, and each of the end covers (2) is capable of opening or closing a cavity (3) at a respective one end of the two ends of the cup body (1) along the height direction of the cup body (1);
wherein cavities (3) of the at least one cavity (3) and the at least two cavities (3) comprise a second storage cavity (31) for holding a roll bag,
**characterized in that** the second storage cavity (31) is disposed at a lower end of the cup body (1), a central shaft (311) is provided in the second storage cavity (31), and the roll bag can be sleeved outside the central shaft (311).

2. The portable cup of claim 1, wherein each of the end covers (2) further comprises:
a cover body (21), wherein the cover body (21) is connected to the respective one end of the two ends of the cup body (1) along the height direction of the cup body (1);
an access port (22), wherein the access port (22) is disposed on the cover body (21) and corresponds to the respective cavity (3); and
a cover plate (23), wherein the cover plate (23) is movably connected to the cover body (21), and the cover plate (23) is capable of opening or closing the respective access port (22).

3. The portable cup of claim 1, wherein an opening of the each cavity (3) is connected to a respective one of the end covers (2), and the each of the end covers (2) comprises:
a cover body (21), wherein the cover body (21) is detachably connected to an end portion at the opening of the respective cavity (3) on the cup body (1).

4. The portable cup of claim 1, wherein a sealing member (5) is provided between each of the end covers (2) and the cup body (1).

5. The portable cup of any one of claims 1 to 4, wherein the portable cup further comprises an additional cavity assembly (6), the additional cavity assembly (6) is detachably connected to the cup body (1) or a respective one of the end covers (2), and an additional cavity (61) is formed between the additional cavity assembly (6) and the cup body (1) or between the additional cavity assembly (6) and the respective one of the end covers (2).

6. The portable cup of claim 5, wherein the additional cavity assembly (6) comprises a cover (62), the cover (62) is detachably connected to an end portion of the cup body (1) or the respective one of the end covers (2) at the end portion of the cup body (1), and the additional cavity (61) is formed between the cover (62) and an end cover (2) located at the lower end of the cup body (1); or the additional cavity assembly (6) further comprises a cover cup, the cover cup is connected to an end portion of the cover (62), and the additional cavity (61) is formed between the cover (62) and the cover cup.

7. The portable cup of any one of claims 1 to 4, wherein cavities (3) of the at least one cavity (3) and the at least two cavities (3) comprise a first storage cavity (32), and the first storage cavity (32) is disposed at an upper end of the cup body (1) and is configured to hold water.

8. The portable cup of claim 1, wherein a side surface of the cup body (1) corresponding to the second storage cavity (31) is provided with an extraction port (312), such that the roll bag is extracted from the extraction port (312).

9. The portable cup of claim 1, wherein the cavities (3) of the at least one cavity (3) and the at least two cavities (3) comprise a third storage cavity (33) for holding food or other pet supplies, and the third storage cavity (33) and the second storage cavity (31) are disposed side by side at the lower end of the cup body (1).

## Patentansprüche

1. Tragbarer Becher, der zum Aufnehmen von Haustier-Vorräten ausgeführt ist und umfasst:
einen Becher-Körper (1), wobei ein Ende von zwei Enden des Becher-Körpers (1) in einer Höhenrichtung des Becher-Körpers (1) mit wenigstens einem Hohlraum (3) versehen ist, ein anderes Ende der zwei Enden des Becher-Körpers (1) in der Höhenrichtung des Becher-Körpers (1) mit wenigstens zwei Hohlräumen (3) versehen ist, und jeder Hohlraum (3) so zum Aufnehmen der Haustier-Vorräte ausgeführt ist, wobei die Haustier-Vorräte Wasser, Futter sowie einen Toilettenbeutel zum Sammeln von Haustierexkrementen umfassen; sowie Endabdeckungen (2), wobei die Endabdeckungen (2) jeweils mit den zwei Enden des Becher-Körpers (1) in der Höhenrichtung des Becher-Körpers (1) verbunden sind und jede der Endabdeckungen (2) in der Lage ist, einen Hohlraum (3) an einem jeweiligen Ende der zwei Enden des Becher-Körpers (1) in der Höhenrichtung des Becher-Körpers (1) zu öffnen oder zu schließen;
wobei
Hohlräume (3) von dem wenigstens einen Hohlraum (3) und den wenigstens zwei Hohlräumen (3) einen zweiten Aufbewahrungs-Hohlraum (31) zum Aufnehmen eines Rollenbeutels umfassen,
**dadurch gekennzeichnet, dass**
der zweite Aufbewahrungs-Hohlraum (31) an einem unteren Ende des Becher-Körpers (1) angeordnet ist, eine mittige Welle (311) in dem zweiten Aufbewahrungs-Hohlraum (31) vorhanden ist, und der Rollenbeutel von außen auf die mittige Welle (311) aufgeschoben werden kann.

2. Tragbarer Becher nach Anspruch 1, wobei jede der Endabdeckungen (2) des Weiteren umfasst:
einen Abdeck-Körper (21), wobei der Abdeck-Körper (21) mit dem jeweiligen einen Ende von den zwei Enden des Becher-Körpers (1) in der Höhenrichtung des Becher-Körpers (1) verbunden ist;
eine Zugangsöffnung (22), wobei die Zugangsöffnung (22) an dem Abdeck-Körper (21) angeordnet ist und dem jeweiligen Hohlraum (3) entspricht; sowie
eine Abdeck-Platte (23), wobei die Abdeck-Platte (23) beweglich mit dem Abdeck-Körper (21) verbunden ist, und die Abdeck-Platte (23) in der Lage ist, die jeweilige Zugangsöffnung (22) zu öffnen oder zu schließen.

3. Tragbarer Becher nach Anspruch 1, wobei eine Öffnung jedes Hohlraums (3) mit einer entsprechenden von den Endabdeckungen (2) verbunden ist und jede von den Endabdeckungen (2) umfasst:
einen Abdeck-Körper (21), wobei der Abdeck-Körper (21) lösbar mit einem Endabschnitt an der Öffnung des jeweiligen Hohlraums (3) an dem Becher-Körper (1) verbunden ist.

4. Tragbarer Becher nach Anspruch 1, wobei ein Dichtungselement (5) zwischen jeder der Endabdeckungen (2) und dem Becher-Körper (1) vorhanden ist.

5. Tragbarer Becher nach einem der Ansprüche 1 bis 4, wobei der tragbare Becher des Weiteren eine zusätzliche Hohlraum-Anordnung (6) umfasst, die zusätzliche Hohlraum-Anordnung (6) lösbar mit dem Becher-Körper (1) oder einer entsprechenden von den Endabdeckungen (2) verbunden ist und ein zusätzlicher Hohlraum (61) zwischen der zusätzlichen Hohlraum-Anordnung (6) und dem Becher-Körper (1) oder zwischen der zusätzlichen Hohlraum-Anordnung (6) und der jeweiligen von den Endabdeckungen (2) ausgebildet ist.

6. Tragbarer Becher nach Anspruch 5, wobei die zusätzliche Hohlraum-Anordnung (6) eine Abdeckung (62) umfasst, die Abdeckung (62) lösbar mit einem Endabschnitt des Becher-Körpers (1) oder der jeweiligen von den Endabdeckungen (2) an dem Endabschnitt des Becher-Körpers (1) verbunden ist und der zusätzliche Hohlraum (61) zwischen der Abdeckung (62) und einer an dem unteren Ende des Becher-Körpers (1) befindlichen Endabdeckung (2) ausgebildet ist; oder die zusätzliche Hohlraum-Anordnung (6) des Weiteren eine Abdeckkappe umfasst, wobei die Abdeckkappe mit einem Endabschnitt der Abdeckung (62) verbunden ist und der zusätzliche Hohlraum (61) zwischen der Abdeckung (62) und der Abdeckkappe ausgebildet ist.

7. Tragbarer Becher nach einem der Ansprüche 1 bis 4, wobei Hohlräume (3) von dem wenigstens einen Hohlraum (3) und den wenigstens zwei Hohlräumen (3) einen ersten Aufbewahrungs-Hohlraum (32) umfassen, und der erste Aufbewahrungs-Hohlraum (32) an einem oberen Ende des Becher-Körpers (1) angeordnet und zum Aufnehmen von Wasser ausgeführt ist.

8. Tragbarer Becher nach Anspruch 1, wobei eine Seitenfläche des Becher-Körpers (1), die dem zweiten Aufbewahrungs-Hohlraum (31) entspricht, mit einer Entnahmeöffnung (312) versehen ist und der Rollenbeutel über die Entnahmeöffnung (312) entnommen wird.

9. Tragbarer Becher nach Anspruch 1, wobei die Hohlräume (3) von dem wenigstens einen Hohlraum (3) und den wenigstens zwei Hohlräumen (3) einen dritten Aufbewahrungs-Hohlraum (33) zum Aufnehmen von Futter oder anderen Haustier-Vorräten umfassen, und der dritte Aufbewahrungs-Hohlraum (33) und der zweite Aufbewahrungs-Hohlraum (31) nebeneinander an dem unteren Ende des Becher-Körpers (1) angeordnet sind.

## Revendications

1. Gobelet portable, conçu pour contenir des produits pour animaux de compagnie et comprenant : un corps de gobelet (1), une extrémité de deux extrémités du corps de gobelet (1) le long d'un sens de la hauteur du corps de gobelet (1) étant pourvue d'au moins une cavité (3), une autre extrémité des deux extrémités du corps de gobelet (1) le long du sens de la hauteur du corps de gobelet (1) étant pourvue d'au moins deux cavités (3), et chaque cavité (3) étant conçue pour recevoir les produits pour animaux de compagnie, les produits pour animaux de compagnie comprenant de l'eau, un aliment, et un sac de toilette pour traiter des excréments d'animal de compagnie ; et
des couvercles d'extrémité (2), les couvercles d'extrémité (2) étant raccordés aux deux extrémités du corps de gobelet (1) le long du sens de la hauteur du corps de gobelet (1), respectivement, et chacun des couvercles d'extrémité (2) étant capable d'ouvrir ou de fermer une cavité (3) à une extrémité respective des deux extrémités du corps de gobelet (1) le long du sens de la hauteur du corps de gobelet (1) ;
des cavités (3) de la au moins une cavité (3) et des au moins deux cavités (3) comprenant une seconde cavité de stockage (31) pour contenir un sac cylindrique, **caractérisé en ce que** la seconde cavité de stockage (31) est disposée à une extrémité inférieure du corps de gobelet (1), un arbre central (311) est disposé dans la seconde cavité de stockage (31), et le sac cylindrique peut être emmanché à l'extérieur de l'arbre central (311).

2. Gobelet portable selon la revendication 1, chacun des couvercles d'extrémité (2) comprenant en outre :
un corps de couvercle (21), le corps de couvercle (21) étant raccordé à la une extrémité respective des deux extrémités du corps de gobelet (1) le long du sens de la hauteur du corps de gobelet (1) ;
un orifice d'accès (22), l'orifice d'accès (22) étant disposé sur le corps de couvercle (21) et correspondant à la cavité (3) respective ; et
une plaque de recouvrement (23), la plaque de recouvrement (23) étant raccordée de manière mobile au corps de couvercle (21), et la plaque de recouvrement (23) étant capable d'ouvrir ou de fermer l'orifice d'accès (22) respectif.

3. Gobelet portable selon la revendication 1, une ouverture de chaque cavité (3) étant raccordée à l'un respectif des couvercles d'extrémité (2), et chacun des couvercles d'extrémité (2) comprenant :
un corps de couvercle (21), le corps de couvercle (21) étant raccordé de manière détachable à une portion d'extrémité au niveau de l'ouverture de la cavité respective (3) sur le corps de gobelet (1).

4. Gobelet portable selon la revendication 1, un élément d'étanchéité (5) étant disposé entre chacun des couvercles d'extrémité (2) et du corps de gobelet (1).

5. Gobelet portable selon l'une quelconque des revendications 1 à 4, le gobelet portable comprenant en outre un ensemble cavité additionnel (6), l'ensemble cavité additionnel (6) étant raccordé de manière détachable au corps de gobelet (1) ou à l'un respectif des couvercles d'extrémité (2), et une cavité additionnelle (61) étant formée entre l'ensemble cavité additionnel (6) et le corps de gobelet (1) ou entre l'ensemble cavité additionnel (6) et le un respectif des couvercles d'extrémité (2).

6. Gobelet portable selon la revendication 5, l'ensemble cavité additionnel (6) comprenant un couvercle (62), le couvercle (62) étant raccordé de manière détachable à une portion d'extrémité du corps de gobelet (1) ou l'un respectif des couvercles d'extrémité (2) au niveau de la portion d'extrémité du corps de gobelet (1), et la cavité additionnelle (61) étant formée entre le couvercle (62) et un couvercle d'extrémité (2) localisé au niveau de l'extrémité inférieure du corps de gobelet (1) ; ou l'ensemble cavité additionnel (6) comprenant en outre un gobelet de couvercle, le gobelet de couvercle étant raccordé à une portion d'extrémité du couvercle (62), et la cavité additionnelle (61) étant formée entre le couvercle (62) et le gobelet de couvercle.

7. Gobelet portable selon l'une quelconque des revendications 1 à 4, des cavités (3) de la au moins une cavité (3) et des au moins deux cavités (3) comprenant une première cavité de stockage (32), et la première cavité de stockage (32) étant disposée au niveau d'une extrémité supérieure du corps de gobelet (1) et étant conçue pour contenir de l'eau.

8. Gobelet portable selon la revendication 1, une surface latérale du corps de gobelet (1) correspondant à la seconde cavité de stockage (31) étant pourvue d'un orifice d'extraction (312), de sorte que le sac cylindrique est extrait de l'orifice d'extraction (312).

9. Gobelet portable selon la revendication 1, les cavités (3) de la au moins une cavité (3) et des au moins deux cavités (3) comprenant une troisième cavité de stockage (33) pour contenir un aliment ou d'autres produits pour animaux de compagnie, et la troisième cavité de stockage (33) et la seconde cavité de stockage (31) étant disposées côte-à-côte au niveau de l'extrémité inférieure du corps de gobelet (1).
